# EUROPEAN PATENT SPECIFICATION

(11) **EP 4 400 654 B1**
(45) Date of publication and mention of the grant of the patent: **21.05.2025**
(21) Application number: 21820653.0
(22) Date of filing: 06.09.2021
(51) Int. Cl.: E02D 27/42

(54) **HYBRID PREFABRICATED FOUNDATION FOR TOWERS AND METHOD OF INSTALLING A HYBRID PREFABRICATED FOUNDATION FOR TOWERS**
HYBRIDES VORGEFERTIGTES FUNDAMENT FÜR TÜRME UND VERFAHREN ZUR INSTALLATION EINES HYBRIDEN VORGEFERTIGTEN FUNDAMENTS FÜR TÜRME
FONDATION PRÉFABRIQUÉE HYBRIDE POUR TOURS ET PROCÉDÉ D'INSTALLATION DE FONDATION PRÉFABRIQUÉE HYBRIDE POUR TOURS

(43) Date of publication of application: 17.07.2024
(73) Proprietor: Acciona Generación Renovable, S.A., 31621 Sarriguren (Navarra) (ES)
(72) Inventor: PIRLETTI, Massimiliano, 31621 Sarriguren (ES)
(74) Representative: Clarke, Modet y Cía., S.L.
(86) International application number: PCT/ES2021/070648
(87) International publication number: WO 2023/031491

(56) References cited:
- WO-A1-2020/012346
- WO-A1-2021/123489
- WO-A2-2011/030199

## Description

### Field of the invention

The present invention belongs to the construction sector, specifically to the construction of towers, masts and poles, and more specifically to the installation of wind turbines towers, and specifically to the foundation of such towers. The present invention relates to a hybrid prefabricated tower foundation, i.e., having prefabricated parts such as pedestal and ribs, and additionally the bottom slab which is in situ concrete. The present invention further relates to a method of installing said hybrid prefabricated tower foundation.

### Background of the invention

In the wind sector, different typologies of foundations are currently used to support wind turbine towers. First of all, complete foundations can be made in situ, i.e, all the concreting and manufacture of these is carried out in the place where they will be installed. Although this modality has some advantages such as the savings in transport costs of the pieces and in their storage, it also has drawbacks as the extension of the deadlines of completion time and therefore of the total costs of the work, as well as the increase in construction costs due to the lack of serial production.

Alternatively, there is a foundation solution directed to the support and foundation of steel towers, which belongs to the segment of foundations called hybrids, since they are formed in part by prefabricated concrete elements and in part by in situ concrete elements. In this typology of foundation, the ribs and pedestal are usually prefabricated, while the bottom slab is executed in situ concrete.

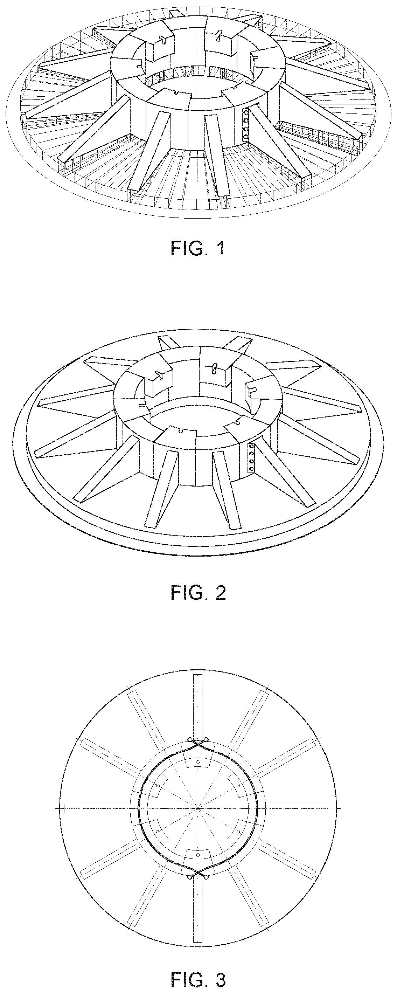

In relation to this typology, in the currently existing solution, the ribs are prefabricated, each of them with a pedestal sector to which they are attached, and on site all the pedestal sectors are arranged radially with the included ribs, and a lateral joint is made, i.e, the lateral faces of the pedestal sectors are joined with the lateral faces of the adjoining pedestal sectors forming the complete pedestal. Subsequently the bottom slab is concreted. Figures 1 and 2 schematically show this type of hybrid prefabricated foundation.

The detail of this currently used technical solution is described in document ITMI20091559A1. This embodiment employs post-tensioned cables that circumferentially bind all the pedestal sectors that form the complete pedestal, as shown schematically in figure 3. In this case, the joint between all the pedestal sectors is achieved by means of the compression of the cables, which is transmitted thanks to the contact between the lateral faces of the pedestal sectors.

This type of embodiment that is based on the contact between the lateral faces of the pedestal sectors presents the problem that it requires a perfect geometry of the pieces, and joint between them without margin of error. If only one piece of pedestal sector showed a minimum geometric deviation of the side faces, then the correct mounting of the foundation could no longer be achieved.

Another drawback related to this solution is the insertion inside the prefabricated pieces of the pedestal sectors of the sheaths for the passage of the circumferential post-tensioning cables. Generally, in the interior of the pieces, the density of reinforcement is so high that the operation of making holes and installing such sheaths is quite complicated. The document WO2020/012346A shows a hybrid prefabricated foundation for towers, said foundation comprising the features of the preamble of the independent claim 1.

A hybrid prefabricated foundation for towers and a method of installing thereof which allows a simple and efficient installation avoiding the existing drawbacks in the state-of-the-art systems are therefore desirable.

### Description of the invention

The present invention solves the problems existing in the state of the art by means of a hybrid prefabricated foundation for towers, which is formed by a circular slab made in-situ, being arranged thereon a set formed by a cylindrical pedestal and by a plurality of ribs joined by an end joining to said pedestal, and arranged radially on the slab. A tower will be attached to the pedestal by means of the tower's bolt cage, which has a plurality of anchor bolts, a lower flange and an upper flange. The foundation is considered a hybrid prefabricated because it has prefabricated elements in the workshop (ribs and pedestal) and others made in the in-situ work (bottom slab).

It should be noted that the bolt cage that includes the anchor bolts, the lower flange and the upper flange, is not part of the foundation, subject matter of this invention, but is an integral part of the tower. The foundation, subject matter of this invention, will be adapted to the bolt cage of the tower to be supported, and not vice versa.

In the present invention the pedestal and rib set is constituted by a plurality of prefabricated upper pieces and a plurality of prefabricated bottom pieces. The upper pieces in turn have a rib, and attached to the upper part of their joining end an upper pedestal sector in such a way that a portion of the upper pedestal sector remains on each side of the rib, while the lower pieces have in turn, a rib, and attached to the lower part of its joining end a lower pedestal sector in such a way that a portion of the lower pedestal sector remains on each side of the rib. In this way, the upper pieces and the lower pieces are placed radially alternated with each other and are joined together vertically overlapped alternately, i.e, an upper piece, a lower piece, an upper piece, etc. This vertical overlap is carried out in such a way that each upper pedestal sector portion of each upper piece is arranged on a lower pedestal sector portion of each of the lower pieces adjacent to each upper piece. Thus, in each of the upper pieces, one of the upper pedestal sector portions on one side of the rib is disposed on a lower pedestal sector portion of the lower piece adjacent to one side of the upper piece, while the other upper pedestal sector portion on the other side of the rib is disposed on a lower pedestal sector portion of the lower piece adjacent to the other side of the upper piece. By means of this configuration the upper pedestal sectors of the upper pieces are arranged on the lower pedestal sectors of the contiguous lower pieces, forming the upper pedestal sectors and the lower pedestal sectors the complete pedestal, fitting the upper pieces on the lower pieces as in a puzzle, obtaining the complete pedestal.

This pedestal has a plurality of anchor holes parallel to the axis of the pedestal and passing throug the entire height of said pedestal, to house anchor bolts of the tower, for anchoring said tower to the pedestal. Logically, these pass-through anchor holes along the pedestal are obtained by a set of pass-through holes arranged in the upper pedestal sectors and a set of pass-through holes arranged in the lower pedestal sectors, the holes of the upper pedestal sectors being aligned with the holes of the lower pedestal sectors, to form the pass-through anchor holes of the complete pedestal.

Additionally, the foundation has a plurality of post-tensioning bolts that are housed in a plurality of pass-through housings arranged on the pedestal, parallel to the axis of said pedestal. As in the case of anchor holes, these pass-through housings along the pedestal are obtained by a set of pass-through housings arranged in the upper pedestal sectors and a set of pass-through housings arranged in the lower pedestal sectors, the housings of the upper pedestal sectors being aligned with the housings of the lower pedestal sectors, to form the pass-through housings of the complete pedestal.

According to a particular embodiment of the invention, the lower base of the upper pedestal sectors presents crenellations while the upper base of the lower pedestal sectors presents crenellations complementary to the crenellations of the upper pedestal sectors, in such a way that said crenellations of both pedestal sectors fit together ensuring and improving the joint between the upper pieces and the lower pieces. This option complicates the manufacture of the molds of the upper and lower pieces, so it will be applied only in the case that the anchor bolts, and the post-tensioning bolts where appropriate are insufficient for the fixing of the upper pedestal sectors on the lower pedestal sectors.

The main difference between the foundation, subject matter of the present invention, and the state-of-the-art existing prefabricated hybrid consists in the form of joining the prefabricated parts together to form the pedestal. In the case of the state-of-the-art foundations, the different sectors are joined laterally, i.e, the lateral faces of the pedestal sectors are joined to the lateral faces of the adjoining pedestal sectors and a post-tensioning and a circumferential joint are carried out. However, in the case of the foundation of the present invention, to form the complete pedestal, the different sectors or portions overlap vertically, i.e., the upper pedestal sectors are joined over the lower pedestal sectors.

The upper pieces and the lower pieces are joined together by overlapping vertically, one over the other, in the pedestal area. The tightening between these pieces is carried out by using the bolt cage (including the anchor bolts and upper and lower flanges), crossing the anchor bolts the upper and lower pieces, and preferably by using post-tensioned bolts that also cross the upper and lower pieces.

In addition, the friction between the lower face of the upper pedestal sector and the upper face of the lower pedestal sector prevents lateral displacements, providing greater security to the joint.

With this type of joint, it is no longer necessary to have contact between the lateral faces of the pedestal sectors, thus being able to leave a tolerance between pieces and obviate the inconvenience presented by the foundation of the state of the art. In addition, since it is not necessary to use circumferential post-tensioning cables, it is not necessary to install them inside the pedestal sectors, nor the creation of sheaths for their passage inside these sectors.

Additionally, the present invention relates to a method of installing the hybrid prefabricated foundation for towers described above, which presents the following steps:
- First, a pouring of lean concrete is carried out in the area in which the foundation will be carried out, then the positioning on said lean concrete of the anchor bolts and the lower flange of the tower to be installed on the foundation, and then the positioning of the lower pieces (which include the ribs and the lower pedestal sectors, leaving a portion of the lower pedestal sector on each side of the rib) on the lean concrete, introducing the anchor bolts through the anchor holes of the lower pedestal sectors.
- Subsequently, the lower pieces are leveled to fix them in their exact position.
- Next, the upper pieces (which include the ribs and the upper pedestal sectors, leaving an upper pedestal sector portion on each side of the rib) are positioned on the lower pieces, so that the upper pieces and the lower pieces are placed radially alternated with each other and are joined together vertically overlapped alternately, i.e, an upper piece, a lower piece, an upper piece, etc. This vertical overlap is carried out in such a way that each upper pedestal sector portion of each upper piece is arranged on a lower pedestal sector portion of each of the lower pieces adjacent to each upper piece. Thus, in each of the upper pieces, one of the upper pedestal sector portions on one side of the rib is disposed on a lower pedestal sector portion of the lower piece adjacent to one side of the upper piece, while the other upper pedestal sector portion on the other side of the rib is disposed on a lower pedestal sector portion of the lower piece adjacent to the other side of the upper piece. By means of this configuration the upper pedestal sectors of the upper pieces are arranged on the lower pedestal sectors of the contiguous lower pieces, forming the upper pedestal sectors and the lower pedestal sectors the complete pedestal, fitting the upper pieces on the lower pieces as in a puzzle, obtaining the complete pedestal. At this step the anchor bolts are introduced through the anchor holes of the upper pedestal sectors.

- Then the upper pieces are leveled, in order to guarantee full contact between the faces of the upper and lower pieces, and the post-tensioning bolts are installed in the pedestal housings and the tightening of these post-tensioning bolts is carried out.
- Then the concreting of the slab is carried out and the positioning of the upper flange of the tower bolt cage on top of the anchor bolts that protrude from the pedestal.
- Finally, the mounting of the tower and subsequent post-tensioning of the anchor bolts is carried out to leave the pedestal fully realized and fixed.

According to a preferred embodiment of the method of installation of the foundation, after the positioning of the upper pieces on the lower pieces a post-tensioning of the pedestal is carried out by introducing post-tensioning bolts into the pedestal housings, and finally, after the mounting of the tower and the post-tensioning of the anchor bolts a new tensioning, or additional re-tensioning of these post-tensioning bolts is carried out.

### Brief description of the figures

In order to facilitate understanding of the invention, an embodiment of the invention referring to a number of figures will now be described by way of illustration, but not limitation.
Figure 1 shows an initial step of a foundation of the state of the art in which all the pieces formed by a rib and a pedestal sector joined laterally forming the complete pedestal are observed.
Fig. 2 shows a final step of the foundation of the state of the art of figure 1 in which the bottom slab has been concreted.
Figure 3 shows a horizontal section view of the foundation of the state of the art of figures 1 and 2, which shows post-tensioned cables that circumferentially bind all the pedestal sectors that form the complete pedestal.
Figure 4 is a perspective of an embodiment of the foundation subject matter of the present invention showing its main components, with the tower attached to said foundation
Figure 5 is a prefabricated upper part of the foundation of Figure 4, showing a portion of the upper pedestal sector on each side of the rib.
Fig. 6 is a prefabricated bottom piece of the foundation of Fig. 4, showing a lower pedestal sector portion on each side of the rib.
Figure 7 is a detailed view of an embodiment of the foundation in which the tower is not arranged to be able to show the anchor bolts of said tower, and in which one of the upper pieces and a post-tensioning bolt are not completely installed to show the mounting in detail.
Figure 8 shows in detail the pedestal between two ribs, showing an upper pedestal sector arranged on a lower pedestal sector.
Figure 9 shows in detail a particular embodiment of a lower part which comprises crenellated on its upper surface.
Figures 10a-10e show in sequence the different steps of a method of installing the hybrid prefabricated foundation for towers, subject matter of the present invention.

In these figures, reference is made to a set of elements that are:
- 1.: upper pieces
- 2.: lower pieces
- 3: slab
- 4.: pedestal
- 4'.: upper pedestal sectors
- 4".: lower pedestal sectors
- 5.: post-tensioning bolt housings
- 6.: Anchor holes
- 7.: reinforcement at the bottom of the ribs
- 8.: ribs
- 9.: support legs at the bottom of the ribs
- 10.: post-tensioning bolts
- 11.: end of ribs joined to pedestal
- 12.: tower
- 13.: upper flange of tower anchor bolts
- 14.: Tower anchor bolts
- 15.: lower flange of tower anchor bolts
- 16.: lean concrete
- 17.: crenellations

### Detailed description of the invention

The subject matter of the present invention is a hybrid prefabricated foundation for towers (12).

As can be seen in the figures, the foundation is formed by a circular slab (3) made in-situ, being arranged in said slab (3) a set formed by a cylindrical pedestal (4) and by a plurality of ribs (8) joined by an joining end (11) to said pedestal (4), being said ribs (8) arranged radially on the slab (3). A tower (12) will be attached to the pedestal (4), concentric with the slab (3), by means of the tower's bolt cage, which has a plurality of anchor bolts (14), a lower flange (15) and an upper flange (13). Each of the ribs (8) has at its bottom at least one support leg (9) for fixing the floor ribs (specifically to the lean concrete (16)). In addition, the ribs (8) also have in their lower part an reinforcement bars (7) for fixing the ribs in the concreting of the slab (3).

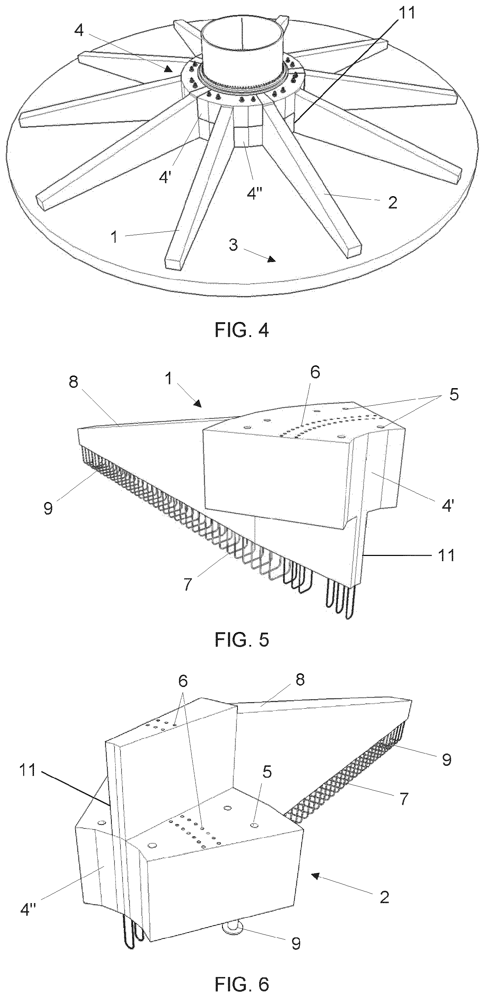

As can be seen in the figures, especially in Figures 4, 5 and 6, the pedestal (4) and rib (8) set is constituted by a plurality of prefabricated upper pieces (1) and a plurality of prefabricated bottom pieces (2). The upper pieces (1) in turn have a rib (8), and attached to the upper part of its joining end (11) an upper pedestal sector (4') in such a way that a portion of the upper pedestal sector (4') remains on each side of the rib (8), while the lower pieces (2) have in turn a rib (8), and attached to the lower part of its joining end (11) a lower pedestal sector (4") in such a way that a portion of the lower pedestal sector (4") remains on each side of the rib (8). Figures 5 and 6 show an upper piece (1) and a lower piece (2) respectively. In this way, the upper pieces (1) and the lower pieces (2) are placed radially alternated with each other and are joined together vertically overlapped alternately, i.e, an upper piece (1), a lower piece (2), an upper piece (1), etc. This vertical overlap is carried out in such a way that each upper pedestal sector portion (4') of each upper piece (1) is arranged on a lower pedestal sector portion (4") of each of the lower pieces (2) adjacent to each upper piece (1). Thus, in each of the upper pieces (1), one of the upper pedestal sector portions (4') on one side of the rib (8) is disposed on a lower pedestal sector portion (4") of the lower piece (2) adjacent to one side of the upper piece (1), while the other upper pedestal sector portion (4') on the other side of the rib (8) is disposed on a lower pedestal sector portion (4") of the lower piece (2) adjacent to the other side of the upper piece (1). By means of this configuration the upper pedestal sectors (4') of the upper pieces (1) are arranged on the lower pedestal sectors (4") of the lower pieces (2), forming all the upper pedestal sectors (4') and all the lower pedestal sectors (4") of the complete pedstal (4). Figure 4 shows the pedestal (4) and rib (8) set formed by the upper pieces (1) and the bottom pieces (2).

Preferably, foundations of ten ribs (8) are usually made, so that said foundations will be formed by five upper pieces (1) and five lower pieces (2), although the number of ribs (8) can vary, being logically always the foundation formed by the same number of upper pieces (1) that of lower pieces (2).

This pedestal (4) has a plurality of anchor holes (6) that are parallel to the axis of the pedestal (4) and passing through the entire height of the pedestal (4), to house anchor bolts (14) of the tower (12), intended for anchoring said tower (12) to the pedestal (4). Logically, these anchor holes (6) through along the pedestal (4) are obtained by a set of pass-through holes arranged in the upper pedestal sectors (4') and a set of pass-through holes arranged in the lower pedestal sectors (4"), the holes of the upper pedestal sectors (4') being aligned with the holes of the lower pedestal sectors (4"), to form the anchor holes (6) passing through the complete pedestal (4).

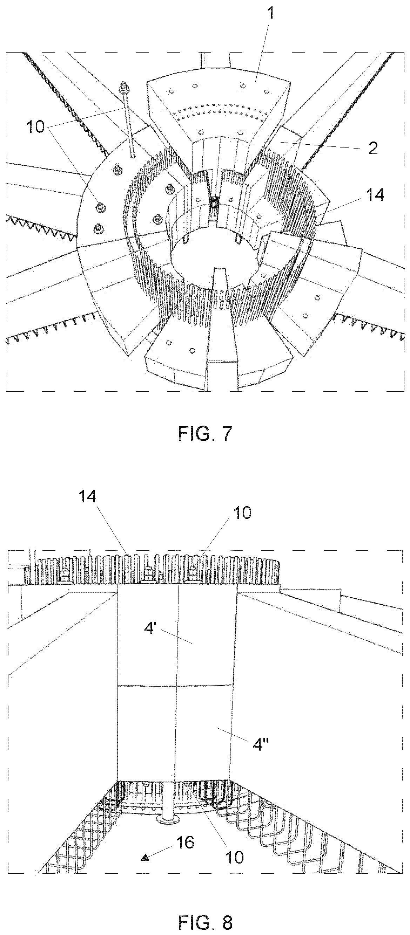

Additionally, as can be seen in Figures 4 and 7, the foundation has a plurality of post-tensioning bolts (10), which are housed in a plurality of pass-through housings (5) arranged on the pedestal (4), parallel to the axis of said pedestal (4). As in the case of the anchor holes (6), these housings (5) through along the entire height of the pedestal (4) are obtained by a set of pass-through housings arranged in the upper pedestal sectors (4') and a set of pass-through housings arranged in the lower pedestal sectors (4"), the housings of the upper pedestal sectors (4') being aligned with the housings of the lower pedestal sectors (4"), to form the pass-through housings (5) of the complete pedestal (4).

Access to the post-tensioning bolts (10) is guaranteed by both ends, thanks to a free distance existing between the lower piece (2) and the lean concrete (16), as can be seen in figure 8.

According to a particular embodiment of the invention, the lower base of the upper pedestal sectors (4') presents crenellations (17), while the upper base of the lower pedestal sectors (4") presents crenellations (17) complementary to the crenellations (17) of the upper pedestal sectors (4'), in such a way that said crenellations (17) of both pedestal sectors (4', 4") fit together ensuring and improving the joint between the upper pieces (1) and the lower pieces (2) of the foundation.

Additionally, the present invention relates to a method of installing the hybrid prefabricated foundation for towers (12) described above, which presents the following steps:

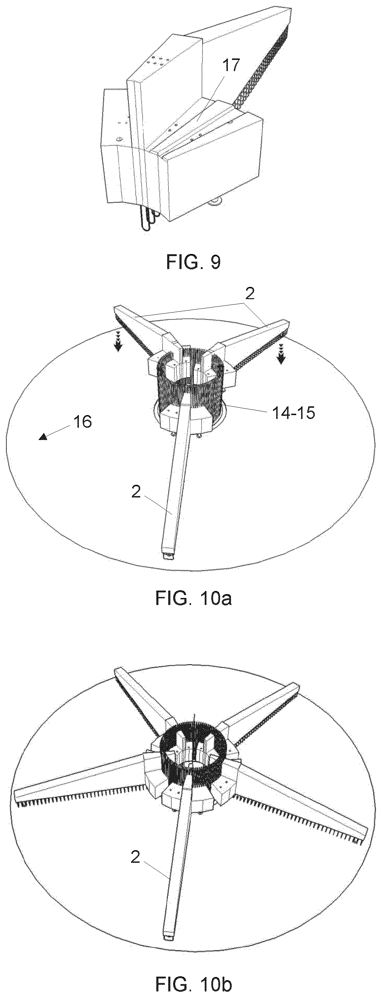

- Figure 10a shows a first step in which a pouring of lean concrete (16) is carried out in the area in which the foundation will be carried out, then the positioning on said lean concrete (16) of the anchor bolts (14) and the lower flange (15) of the tower (12) to be installed on the foundation is carried out, and then the positioning of the lower pieces (2) (which include the ribs (8) and the lower pedestal sectors (4") is carried out, leaving a portion of the lower pedestal sector (4") on each side of the rib (8)) on the lean concrete (16), introducing the anchor bolts (14) through the holes of the lower pedestal sectors (4").
- Figure 10b shows a second step in which the lower pieces (2) are leveled to fix them in their exact position.

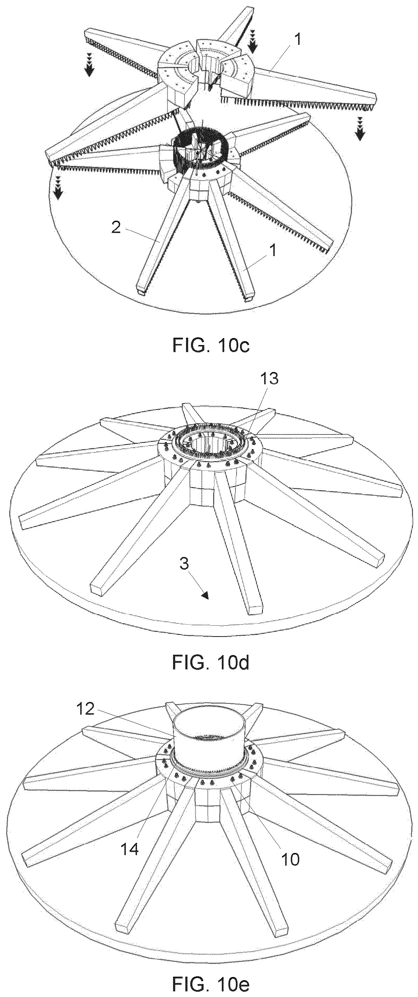

- Figure 10c shows a third step in which the upper pieces (1) (which include the ribs (8) and the upper pedestal sectors (4') are positioned, leaving an upper pedestal sector portion (4') on each side of the rib (8)) on the lower pieces (2), so that the upper pieces (1) and the lower pieces (2) are placed radially alternated with each other and are joined together vertically overlapped alternately, i.e, an upper piece (1), a lower piece (2), an upper piece (1), etc. This vertical overlap is carried out in such a way that each upper pedestal sector portion (4') of each upper piece (1) is arranged on a lower pedestal sector portion (4") of each of the lower pieces (2) adjacent to each upper piece (1). Thus, in each of the upper pieces (1), one of the upper pedestal sector portions (4') on one side of the rib (8) is disposed on a lower pedestal sector portion (4") of the lower piece (2) adjacent to one side of the upper piece (1), while the other upper pedestal sector portion (4') on the other side of the rib (8) is disposed on a lower pedestal sector portion (4") of the lower piece (2) adjacent to the other side of the upper piece (1). By means of this configuration the upper pedestal sectors (4') of the upper pieces (1) are arranged on the lower pedestal sectors (4") of the lower pieces (2), forming the upper pedestal sectors (4') and the lower pedestal sectors (4") of the complete pedestal (4), fitting the upper pieces (1) on the lower pieces (2) as in a puzzle, obtaining the complete pedestal (4). At this step the anchor bolts (14) are introduced through the holes of the upper pedestal sectors (4'). Leveling of the upper pieces (1) and introduction and tightening of post-tensioning bolts (10) in housings (5) of the pedestal (4) is also carried out.
- Figure 10d shows a fourth step in which the concreting of the slab (3) and the positioning of the upper flange (13) of the tower bolt cage (12) is carried out on the upper part of the anchor bolts (14) that protrude from the pedestal (4) formed by the upper pedestal sectors (4') arranged on the lower pedestal sectors (4").
- Figure 10e shows the last step in which the mounting of the tower (12) and subsequent post-tensioning of the anchor bolts (14) is carried out to leave the pedestal (4) and the tower (12) fully realized and fixed to it.

According to a preferred embodiment of the method of installation of the foundation, after the mounting of the tower (12) and the post-tensioning of the anchor bolts (14) a new tensioning, or additional re-tensioning of these post-tensioning bolts (10) is carried out to affirm the clamping.

## Claims

1. Hybrid prefabricated foundation for towers, comprising a circular slab (3) made in-situ, and arranged therein a set formed by a cylindrical pedestal (4) and by a plurality of ribs (8) joined by an joining end (11) to said pedestal (4), and arranged radially on the slab (3), the pedestal (4) being configured for the fixing of a tower (12),
wherein the set of pedestal (4) and ribs (8) is constituted by
- a plurality of upper pieces (1) prefabricated, which in turn comprise a rib (8), and attached to the upper part of its connection end (11) an upper pedestal sector (4 ') in such a way that a portion of the upper pedestal sector (4 ') remains on each side of the rib (8), and a plurality of prefabricated lower pieces (2), which in turn comprise a rib (8), and attached to the lower part of its connection end (11) a lower pedestal sector (4") in such a way that a portion of the lower pedestal sector (4") remains on each side of the rib (8), **characterized in that**
the upper pieces (1) and the lower pieces (2) being arranged radially alternated with each other, alternately vertically overlapping each other, each portion of the upper pedestal sector (4 ') of each upper piece (1) being arranged on a portion of the lower pedestal sector (4 ") of each of the lower pieces (2) adjacent to each upper piece (1), in such a way that the upper pedestal sectors (4 ') of the upper pieces (1) are arranged on the lower pedestal sectors (4 ") of the adjacent lower pieces (2), the upper pedestal sectors (4 ') and the lower pedestal sectors (4' ') forming the pedestal (4),
- the pedestal (4) comprising:
- a plurality of anchor holes (6) parallel to the axis of the pedestal (4) and passing through the entire height of said pedestal (4), configured to house anchor bolts (14) of the tower (12), for anchoring said tower (12) to the pedestal (4), and
- a plurality of post-tensioning bolts (10) housed in a plurality of housings (5) arranged on the pedestal (4), parallel to the axis of said pedestal (4) and passing through thereof.

2. Hybrid prefabricated foundation for towers according to claim 1, wherein the lower base of the upper pedestal sectors (4') comprises crenellations (17) and the upper base of the lower pedestal sectors (4") comprises crenellations (17) complementary to the crenellations (17) of the upper pedestal sectors (4'), said crenellations (17) of both pedestal sectors (4',4' ') being fitted together.

3. Method of installing the hybrid prefabricated foundation for towers of claims 1 to 2, **characterized in that** it comprises the following steps:
- pouring of lean concrete (16), positioning on said lean concrete (16) of anchor bolts (14) and lower flange (15) of the tower (12), and positioning of the lower pieces (2) on the lean concrete (16) by introducing the anchor bolts (14) through the anchor holes (6) of the lower pedestal sectors (4"),
- levelling of the lower pieces (2),
- positioning of the upper pieces (1) on the lower pieces (2) by introducing the anchor bolts (14) through the anchor holes (6) of the upper pedestal sectors (4'), levelling of the upper pieces (1) and introduction and tightening of post-tensioning bolts (10) in housings (5) of the pedestal (4),
- concreting of the slab (3) and positioning of the upper flange (13) on the upper part of the anchor bolts (14) that protrude from the pedestal (4),
- mounting of the tower (12) and post-tensioning of the anchor bolts (14).

4. Method of installing the prefabricated hybrid foundation for towers according to claim 3, wherein after the mounting of the tower (12) and the post-tensioning of the anchor bolts (14) a further re-tensioning of the post-tensioning bolts (10) is carried out.

## Patentansprüche

1. Hybrides vorgefertigtes Fundament für Türme mit einer vor Ort hergestellten runden Grundplatte (3) und einer darin angeordneten Baugruppe, bestehend aus einem zylindrischen Sockel (4) und einer Vielzahl von radial auf der Platte (3) angeordneten Streben (8), die über ein Verbindungsende (11) mit dem genannten Sockel (4) verbunden sind, wobei der Sockel (4) zur Befestigung eines Turms (12) ausgelegt ist, wobei die Baugruppe aus Sockel (4) und Streben (8) aus Folgendem besteht:
- einer Vielzahl vorgefertigter Oberteile (1), bestehend jeweils aus einer Strebe (8), und einem oberen Sockelabschnitt (4'), der so am oberen Teil des jeweiligen Verbindungsendes (11) angebracht ist, dass ein Teil des oberen Sockelabschnitts (4') auf jeder Seite der Strebe (8) übersteht, und eine Vielzahl vorgefertigter Unterteile (2), bestehend jeweils aus einer Strebe (8), und einem unteren Sockelabschnitt (4"), der so am unteren Teil des jeweiligen Verbindungsendes (11) angebracht ist, dass ein Teil des unteren Sockelabschnitts (4") auf jeder Seite der Strebe (8) übersteht, **dadurch gekennzeichnet, dass** die Oberteile (1) und die Unterteile (2) radial abwechselnd angeordnet sind und sich abwechselnd vertikal überlappen, wobei jeweils ein Bereich des oberen Sockelabschnitts (4') eines Oberteils (1) auf einem Bereich des unteren Sockelabschnitts (4") des benachbarten Unterteils (2) eines Oberteils (1) angeordnet ist, sodass die oberen Sockelabschnitte (4') der Oberteile (1) auf den unteren Sockelabschnitten (4") der angrenzenden Unterteile (2) angeordnet sind, wobei die oberen Sockelabschnitte (4') und die unteren Sockelabschnitte (4") den Sockel (4) bilden,
- wobei der Sockel (4) Folgendes umfasst:
- eine Vielzahl von Ankerbohrungen (6) parallel zur Achse des Sockels (4), die sich über die gesamte Höhe des genannten Sockels (4) erstrecken, zur Aufnahme von Ankerbolzen (14) des Turms (12) zur Verankerung des genannten Turms (12) am Sockel (4), und
- eine Vielzahl von Bolzen mit nachträglicher Vorspannung (10) in einer Vielzahl von Aufnahmen (5), die im Sockel (4) parallel zur Achse des genannten Sockels (4) angeordnet sind und diesen durchqueren.

2. Hybrides vorgefertigtes Fundament für Türme nach Anspruch 1, wobei die untere Grundfläche der oberen Sockelabschnitte (4') eine Zinnenstruktur (17) aufweist und die obere Grundfläche der unteren Sockelabschnitte (4") eine zu der Zinnenstruktur (17) der oberen Sockelabschnitte (4') komplementäre Zinnenstruktur (17) aufweist, wobei die genannten Zinnenstrukturen (17) der beiden Sockelabschnitte (4', 4") ineinandergefügt sind.

3. Verfahren zur Installation des hybriden vorgefertigten Fundaments für Türme der Ansprüche 1 bis 2, **dadurch gekennzeichnet, dass** es die folgenden Schritte umfasst:
- Vergießen von Magerbeton (16), Positionieren der Ankerbolzen (14) und des unteren Flansches (15) des Turms (12) auf dem genannten Magerbeton (16) und Positionieren der Unterteile (2) auf dem Magerbeton (16) unter Einführen der Ankerbolzen (14) durch die Ankerbohrungen (6) der unteren Sockelabschnitte (4"),
- Nivellieren der Unterteile (2),
- Aufsetzen der Oberteile (1) auf die Unterteile (2) unter Einführen der Ankerbolzen (14) durch die Ankerbohrungen (6) der oberen Sockelabschnitte (4'), Nivellieren der Oberteile (1) sowie Einführen und Verspannen der Bolzen mit nachträglicher Vorspannung (10) in den Aufnahmen (5) des Sockels (4),
- Betonieren der Grundplatte (3) und Aufsetzen des oberen Flansches (13) auf den oberen Teil der aus dem Sockel (4) herausragenden Ankerbolzen (14),
- Setzen des Turms (12) und nachträgliches Vorspannen der Ankerbolzen (14).

4. Verfahren zur Installation des hybriden vorgefertigten Fundaments für Türme gemäß Anspruch 3, wobei nach dem Setzen des Turms (12) und dem nachträglichen Vorspannen der Ankerbolzen (14) ein weiteres Nachspannen der Bolzen mit nachträglicher Vorspannung (10) durchgeführt wird.

## Revendications

1. Fondation préfabriquée hybride pour tours, comprenant une dalle circulaire (3) réalisée *in situ*, sur laquelle est disposé un ensemble formé par un piédestal cylindrique (4) et par une pluralité de nervures (8) reliées par une extrémité de liaison (11) audit piédestal (4), et disposées radialement sur la dalle (3), le piédestal (4) étant configuré pour la fixation d'une tour (12), dans laquelle l'ensemble formé par le piédestal (4) et les nervures (8) est constitué :
- d'une pluralité de pièces supérieures (1) préfabriquées, comprenant à leur tour une nervure (8), et munies à la partie supérieure de leur extrémité de liaison (11) d'un secteur supérieur de piédestal (4') de telle sorte qu'une portion du secteur supérieur de piédestal (4') reste de chaque côté de la nervure (8), et d'une pluralité de pièces inférieures (2) préfabriquées, comprenant à leur tour une nervure (8), et munies à la partie inférieure de leur extrémité de liaison (11) d'un secteur inférieur de piédestal (4") de telle sorte qu'une portion du secteur inférieur de piédestal (4") reste de chaque côté de la nervure (8), **caractérisée en ce que** les pièces supérieures (1) et les pièces inférieures (2) sont disposées radialement en alternance, se chevauchant verticalement de manière alternée les unes aux autres, chaque portion du secteur supérieur de piédestal (4') de chaque pièce supérieure (1) étant disposée sur une portion du secteur inférieur de piédestal (4") de chacune des pièces inférieures (2) adjacentes à chaque pièce supérieure (1), de telle sorte que les secteurs supérieurs de piédestal (4') des pièces supérieures (1) sont disposés sur les secteurs inférieurs de piédestal (4") des pièces inférieures (2) adjacentes, les secteurs supérieurs de piédestal (4') et les secteurs inférieurs de piédestal (4") formant le piédestal (4),
- le piédestal (4) comprenant :
- une pluralité de trous d'ancrage (6) parallèles à l'axe du piédestal (4) et traversant toute la hauteur dudit piédestal (4), configurés pour loger des boulons d'ancrage (14) de la tour (12), afin d'ancrer ladite tour (12) au piédestal (4), et
- une pluralité de boulons de post-tension (10) logés dans une pluralité de logements (5) disposés dans le piédestal (4), parallèles à l'axe dudit piédestal (4) et le traversant.

2. Fondation préfabriquée hybride pour tours selon la revendication 1, dans laquelle la base inférieure des secteurs supérieurs de piédestal (4') comprend des crénelures (17) et la base supérieure des secteurs inférieurs de piédestal (4") comprend des crénelures (17) complémentaires aux crénelures (17) des secteurs supérieurs de piédestal (4'), lesdites crénelures (17) des deux secteurs de piédestal (4', 4") étant emboîtées entre elles.

3. Procédé d'installation de la fondation préfabriquée hybride pour tours selon les revendications 1 à 2, **caractérisé en ce qu'**il comprend les étapes suivantes :
- coulage de béton maigre (16), positionnement sur ledit béton maigre (16) de boulons d'ancrage (14) et d'une bride inférieure (15) de la tour (12), et positionnement des pièces inférieures (2) sur le béton maigre (16) en introduisant les boulons d'ancrage (14) à travers les trous d'ancrage (6) des secteurs inférieurs de piédestal (4").
- mise à niveau des pièces inférieures (2),
- positionnement des pièces supérieures (1) sur les pièces inférieures (2) en introduisant les boulons d'ancrage (14) à travers les trous d'ancrage (6) des secteurs supérieurs de piédestal (4'), mise à niveau des pièces supérieures (1) et introduction et serrage des boulons de post-tension (10) dans les logements (5) du piédestal (4),
- bétonnage de la dalle (3) et positionnement de la bride supérieure (13) sur la partie supérieure des boulons d'ancrage (14) dépassant du piédestal (4),
- montage de la tour (12) et post-tensionnement des boulons d'ancrage (14).

4. Procédé d'installation de la fondation préfabriquée hybride pour tours selon la revendication 3, dans lequel, après le montage de la tour (12) et le post-tensionnement des boulons d'ancrage (14), un nouveau tensionnement additionnel des boulons de post-tension (10) est effectué.
